# EUROPEAN PATENT SPECIFICATION

(11) **EP 2 353 988 B1**
(45) Date of publication and mention of the grant of the patent: **06.11.2013**
(21) Application number: 09828998.6
(22) Date of filing: 17.11.2009
(51) Int. Cl.: F16H 57/04, B62K 11/04, B62K 19/46, F16H 57/035

(54) **STRADDLED VEHICLE**
GRÄTSCHSITZFAHRZEUG
VÉHICULE DESTINÉ À ÊTRE ENFOURCHÉ

(30) Priority: 28.11.2008 JP 2008304386
(43) Date of publication of application: 10.08.2011
(73) Proprietor: Honda Motor Co., Ltd., Minato-ku Tokyo 107-8556 (JP)
(72) Inventor: NAKABAYASHI, Shunichi, Wako-shi Saitama 351-0193 (JP); KUSANO, Takuhei, Wako-shi Saitama 351-0193 (JP); TAKIZAWA, Kota, Wako-shi Saitama 351-0193 (JP)
(74) Representative: Sakellarides, Vasiliki-Vali
(86) International application number: PCT/JP2009/069462
(87) International publication number: WO 2010/061750

(56) References cited:
- EP-A2- 1 170 480
- JP-A- 4 224 492
- JP-A- 11 171 079
- JP-A- 2002 130 440
- JP-A- 2002 274 468
- JP-A- 2006 082 732

## Description

### TECHNICAL FIELD

The present invention relates to an improvement in a saddled riding vehicle and, more particularly, to an improved cooling duct for cooling a belt-type continuously variable transmission by ventilating an interior of a transmission chamber which houses the belt-type continuously variable transmission provided in the saddled riding vehicle.

### BACKGROUND ART

Japanese Patent Application Laid-Open Publication No. 2007-38736 (JP 2007038736A = Patent Document 1), for example, discloses a known example of a saddled riding vehicle in which a cooling duct extends from a transmission case of a belt-type continuously variable transmission to the vicinity of a leg shield.

The engine unit disclosed in Patent Document 1 comprises an engine and a belt-type continuously variable transmission. This belt-type continuously variable transmission is housed in a transmission case. An air intake duct for feeding outside air into the transmission case is connected to the transmission case. The air intake duct extends toward the front of the vehicle body from the transmission case. An air chamber disposed behind the leg shield is connected to the distal end of the air intake duct. An intake duct for taking air into the air chamber is connected to the top part of the air chamber. This intake duct has an air intake port in the end part.

Patent Document 1 also discloses another embodiment. An exhaust duct for discharging air warmed in the transmission case to the exterior is connected to the transmission case. This exhaust duct extends to the vicinity of the back surface of the leg shield. The air intake duct and the exhaust duct are disposed between the transmission case and the leg shield, but since the space between the transmission case and the leg shield is also the space for the driver's legs, the space for the legs is smaller.

JP04224492A discloses a saddled riding vehicle in accordance with the preamble of claim 1.

EP1170480A discloses a saddled riding vehicle wherein the air intake port and exhaust port are disposed on opposite sides of the vehicle longitudinal center line.

>

### SUMMARY OF INVENTION

### TECHNICAL PROBLEM

It is therefore an object of the present invention to provide a saddled riding vehicle in which the space for the driver's legs can be made sufficiently large.

### SOLUTION TO PROBLEM

According to the present invention, there is provided a saddled riding vehicle comprising a vehicle body frame; a power unit attached to the vehicle body frame and having a transmission chamber for housing a belt-type continuously variable transmission; an air intake duct for feeding outside air into the transmission chamber, the air intake duct being connected to the power unit; and an exhaust duct for discharging air in the transmission chamber to the exterior, the exhaust duct being connected to the power unit; wherein the air intake duct and the exhaust duct both extend farther to the rear of the vehicle than the continuously variable transmission.

The air intake duct has an air intake port, the exhaust duct has an exhaust port, and the air intake port and exhaust port are disposed so as to be offset to the left and right about a vehicle body center line that extends longitudinally through the vehicle widthwise center.

The vehicle has a seat disposed above the continuously variable transmission, a storage box supported on the vehicle body frame is disposed underneath the seat, and the air intake duct and exhaust duct are disposed so as to be offset to the left and right of the storage box.

In a preferred form, the air intake duct or the exhaust duct is provided so as to extend along an external peripheral surface of the storage box.

The vehicle may comprise a swing arm provided behind the power unit so as to be swingably attached at a front end to the vehicle body frame and to support a rear wheel at a rear end, and the air intake duct and the exhaust duct are disposed farther forward than the swing arm.

### ADVANTAGEOUS EFFECTS OF INVENTION

Disposing both the air intake duct and the exhaust duct in the space farther to the rear of the vehicle than the continuously variable transmission makes it possible to form a larger space than in conventional practice and to ensure a large space for the driver's legs, because the air intake duct and the exhaust duct are not provided in a space farther forward in the vehicle than the continuously variable transmission; e.g., between the continuously variable transmission and a leg shield disposed in front of the continuously variable transmission, as is the case in conventional practice.

Since the air intake port of the air intake duct and the exhaust port of the exhaust duct are positioned to the left and right on either side of a vehicle body center line, the air intake port and the exhaust port are separated to the left and right, air warmed in the transmission chamber and discharged from the exhaust port is inhibited from being drawn in through the air intake port, and the continuously variable transmission can be effectively cooled.

Since the air intake port of the air intake duct and the exhaust port of the exhaust duct are positioned to the left and right of the storage box, the storage box between the air intake port and the exhaust port causes air warmed in the transmission chamber and discharged from the exhaust port to be blocked by the storage box and inhibited from flowing toward the air intake port, and air is therefore better inhibited from being drawn in through the air intake port. In other words, the presence of the storage box between the air intake duct and the exhaust duct makes it possible for warm air discharged from the exhaust port of the exhaust duct to be blocked by the storage box and better inhibited from being drawn in through the air intake port of the air intake duct. Therefore, the continuously variable transmission, can be more effectively cooled by air that has not been warmed.

If the air intake duct and the exhaust duct are provided so as to extend along an external peripheral surface of the storage box, the amount by which the air intake duct and exhaust duct protrude from the external peripheral surface of the storage box can be reduced, and a size increase of the vehicle body can be prevented.

If a swing arm is provided behind the power unit so as to be swingably attached at the front end to the vehicle body frame and to support a rear wheel at the rear end, and the air intake duct and the exhaust duct are disposed farther forward than the swing arm, the air intake duct and the exhaust duct can be shortened, and the air intake duct and exhaust duct can be reduced in weight.

### BRIEF DESCRIPTION OF DRAWINGS

FIG. 1 is a side view of a saddled riding vehicle comprising a cooling duct according to an embodiment of the present invention;
FIG. 2 is a side view showing the air intake duct shown in FIG. 1 and its surrounding periphery in detail;
FIG. 3 is a side view showing the air intake duct and exhaust duct shown in FIG. 2 and their surrounding peripheries;
FIG. 4 is a perspective view of the power unit shown in FIG. 1;
FIG. 5 is a drawing showing a cross section of part of the power unit shown in FIG. 4;
FIG. 6 is a drawing showing the manner in which the air intake duct is attached;
FIG. 7 is a perspective view of the air intake duct shown in FIG. 6;
FIG. 8 is a plan view showing the arrangement relationship between the air intake duct and the exhaust duct shown in FIG. 3;
FIG. 9 is a side view showing another embodiment of the air intake duct;
FIG. 10 is a side view showing another embodiment of an exhaust duct;
FIG. 11 is a plan view of the air intake duct and the exhaust duct of the other embodiment shown in FIGS. 9 and 10;
FIG. 12 is a top plan view of yet another embodiment of an air intake duct and an exhaust duct: and
FIG. 13 is a side view of the air intake duct and the exhaust duct of the other embodiment shown in FIG. 12.

### DESCRIPTION OF EMBODIMENTS

Certain preferred embodiments of the present invention are described below, by way of example only, with reference to the attached drawings. In the present embodiment, a two-wheeled motor vehicle is presented as an example of a saddled riding vehicle.

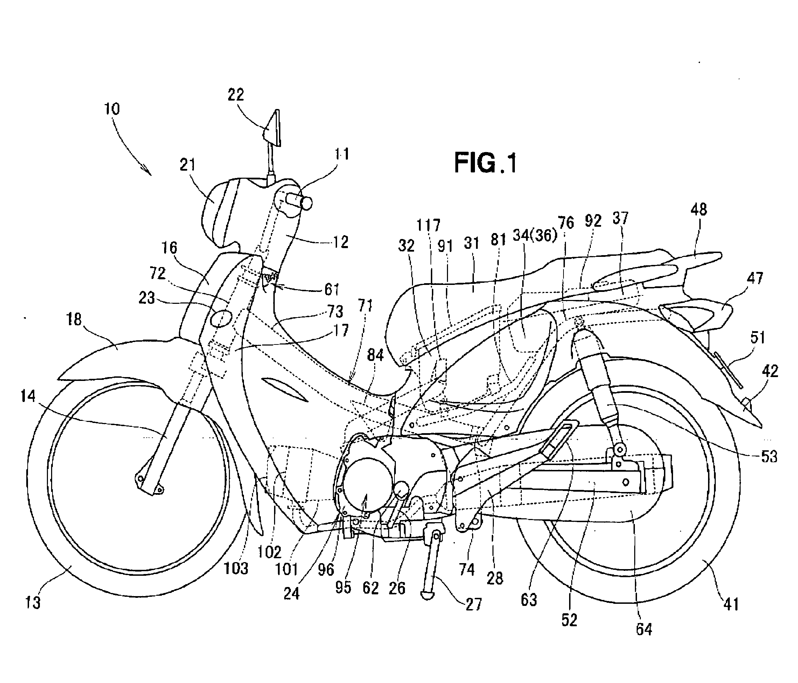

A handlebar 11 of a two-wheeled motor vehicle 10 shown in FIG. 1 is covered by a handle cover 12. A front wheel 13 is steered by a front fork 14. A head pipe 72 provided at the top of the front fork 14 is covered by a front cover 16. A pair of left and right leg shields 17, 17 covers the legs of a driver. The top of the front wheel 13 is covered by a front fender 18.

A headlight 21 and a back mirror 22 are attached to the handle cover 12. A pair of left and right front blinkers 23, 23 is attached to the leg shields 17, 17. A power unit 24 attached to a vehicle body frame 71 is disposed in the center of the vehicle body. A step bar 26 is attached to the bottom of the power unit 24. A kickstand 27 and a pair of left and right step brackets 28, 28 are attached to the bottom of the vehicle body frame 71.

Provided to the rear part of the vehicle body are a seat 31; a center cover 32, a pair of left and right side covers 34, 36, and a rear cover 37 for covering the edges of the seat 31 from below; a rear fender 42 for covering the top of a rear wheel 41; a taillight unit 47 attached to the rear fender 42; and a grab rail 48 disposed in the rear vicinity of the seat 31 for a passenger to grab by hand. The taillight 47 is a combination of a brake light and rear blinkers.

A license plate 51 is attached to the rear fender 42. A swing arm 52 is swingably attached to the vehicle body frame 71. A pair of left and right rear cushion units 53, 53 is attached between the swing arm 52 and the rear part of the vehicle body frame 71.

The numerical symbol 61 in the drawing denotes a parking knob provided to a parking brake device (not shown) for keeping the rear wheel 41 in a braked state, 62 denotes a pair of left and right driver steps attached to the ends of the step bar 26, 63 denotes passenger steps attached to the distal ends of the step brackets 28, and 64 denotes a chain cover.

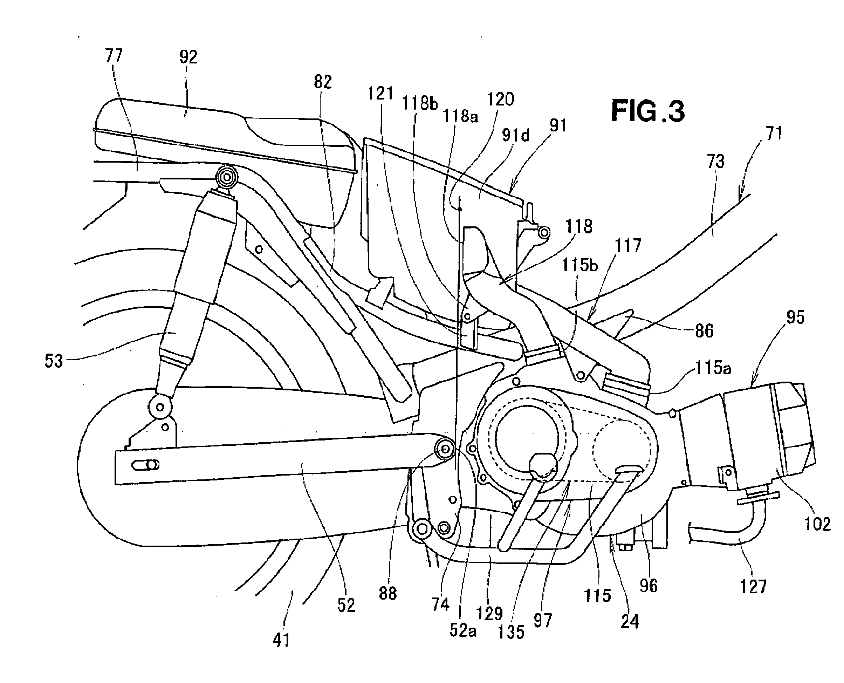

The vehicle body frame 71 is composed of the head pipe 72 constituting the front end, a main frame 73 extending downward at a rearward incline from the head pipe 72, a pivot plate 74 attached to the rear end of the main frame 73, a pair of left and right rear frames 76, 77 (see FIG. 3 for the reference numeral 77) upward at a rearward incline from the rear end of the main frame 73, and a pair of left and right sub-frames 81, 82 (see FIG. 3 for the reference numeral 82) spanning between the main frame 73 and the rear frames 76, 77, respectively.

A pair of left and right engine hangers 84, 86 (see FIG. 3 for the reference numeral 86) is attached in the center of the main frame 73. The power unit 24 is attached to the engine hangers 84, 86 and the pivot plate 74.

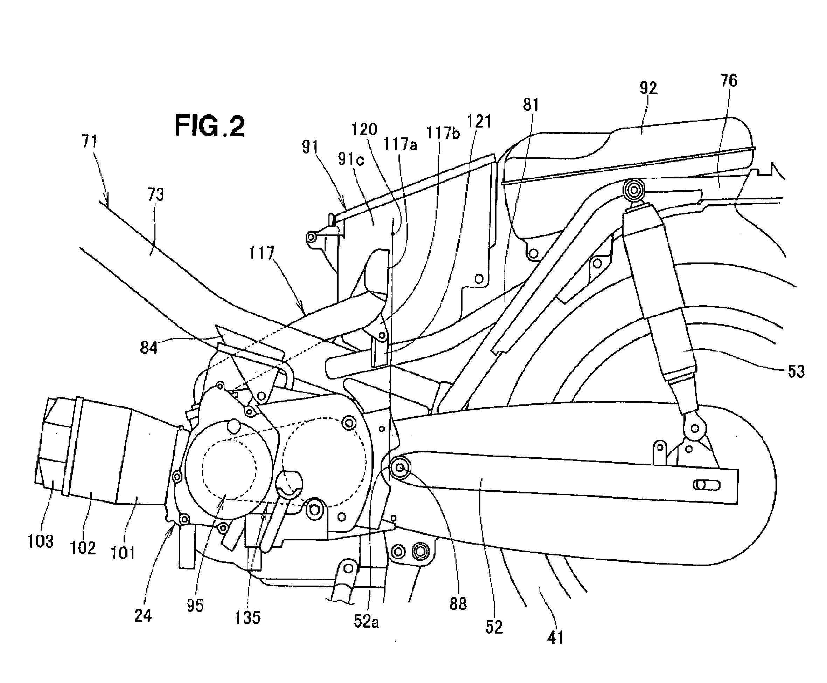

The pivot plate 74 is a member to which are attached the step brackets 28 and a pivot axle 88 (see FIG. 2) for supporting the swing arm 52 in a vertically swingable manner.

A storage box 91 is disposed underneath the seat 31. The storage box 91 is attached to the main frame 73 and the pair of left and right sub-frames 81, 82. The seat 31 is attached to the storage box 91 in an openable and closeable manner. A fuel tank 92 is attached to the back of the rear frames 76, 77.

The center cover 32 covers the rear side of the main frame 73 as well as the front and top sides of the storage box 91. The side covers 34, 36 cover the rear end side of the main frame 73, the sides of the rear frames 76, 77, the sides of the sub-frames 81, 822, and the bottom side of the storage box 91.

The power unit 24 is composed of an engine 95 and a belt-type continuously variable transmission 97 (see FIG. 3) integrally provided to a crankcase 96 of the engine 95. The engine 95 comprises the crankcase 96, a cylinder block 101 attached to the front end of the crankcase 96, a cylinder head 102 attached to the cylinder block 101, and a head cover 103 for covering a front opening in the cylinder head 102.

The continuously variable transmission 97 is disposed underneath the seat 31, and an air intake duct 117 is connected to feed outside air into the interior and to cool the transmission. The air intake duct 117 extends to a space between the side cover 34 and the storage box 91.

FIGS. 2 and 3 show the air intake duct shown in FIG. 1, an exhaust duct, and their surrounding periphery. In FIG. 2, the air intake duct 117 comprises an air intake port 117a provided to the distal end so as to open toward the rear of the vehicle, and a frame attachment piece 117b provided in order to attach the duct to the sub-frame 81 via a duct attachment bracket 121 below the air intake port 117. The air intake duct 117 is disposed in a space formed between the center cover 32 (FIG. 1) and left side cover 34 (FIG. 1) and the storage box 91, and is disposed farther forward than a front end 52a of the swing arm 52. In other words, the air intake duct 117 is positioned farther forward than a vertical line 120 passing through the front end 52a of the swing arm 52, and the air intake port 117a is positioned to the side of a side surface 91c of the storage box 91.

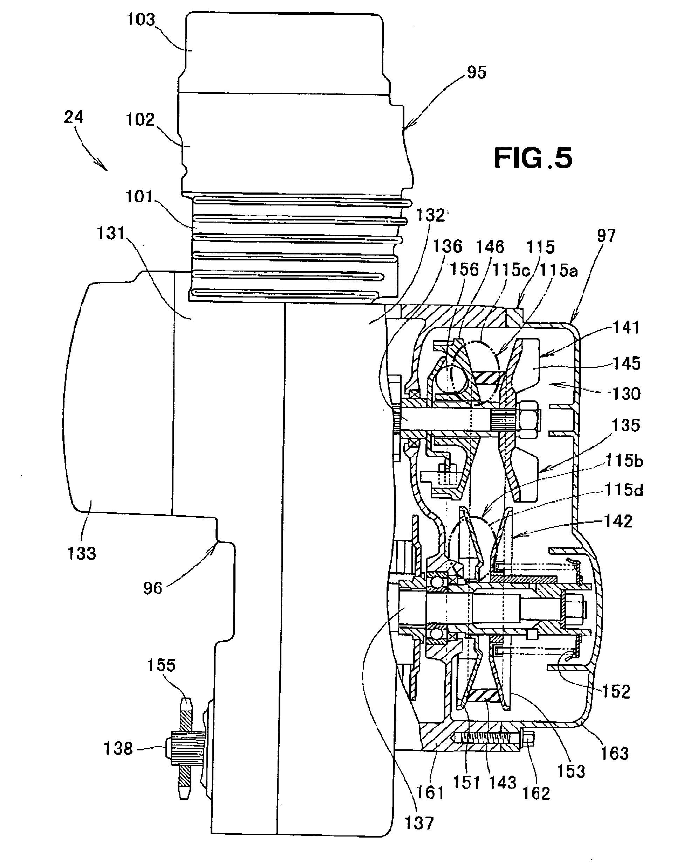

A transmission case 115 of the continuously variable transmission 97 is attached to the right side of the crankcase 96, as shown in FIG. 3. A continuously variable transmission body section 135 shown in detail in FIG. 5 is accommodated in a transmission chamber 130 (FIG. 5) inside the transmission case 115. The continuously variable transmission body section 135 constitutes the continuously variable transmission 97.

Connected to the transmission case 115 are the air intake duct 117 for feeding outside air into the transmission chamber 130 and cooling the continuously variable transmission body section 135, and an exhaust duct 118 for discharging air in the transmission chamber 130 (including air warmed by the operation of the continuously variable transmission body section) to the exterior. The air intake duct 117 is connected to the top of the front part of the transmission case 115, and the exhaust duct 118 is connected tn the top of the back part of the transmission case 115, which is behind the air intake duct 117.

The air intake duct 117 extends backward from the area where the duct is connected with the transmission case 115 so as to gradually rise backward.

The exhaust duct 118 comprises an exhaust port 118a provided to the distal end so as to open toward the rear of the vehicle, and a frame attachment piece 118b provided below the exhaust port 118a in order to attach to the right sub-frame 82 via the duct attachment bracket 121. The exhaust duct 118 is made to extend backward and upward from the connection part with the transmission case 115, and is disposed in front of the front end 52a of the swing arm 52 in the space between the storage box 91 and the center cover 32 (FIG. 1) and right side cover 36. In other words, the exhaust duct 118 is positioned farther forward than the vertical line 120 passing through the front end 52a of the swing arm 52, and the exhaust port 118a is positioned next to a right side surface 91d of the storage box 91.

The pivot axle 88 is attached to the pivot plate 74 in order to swingably support the swing arm 52. One end of an exhaust tube 127 is connected to the bottom part of the cylinder head 102. The reference numeral 129 denotes a brake pedal.

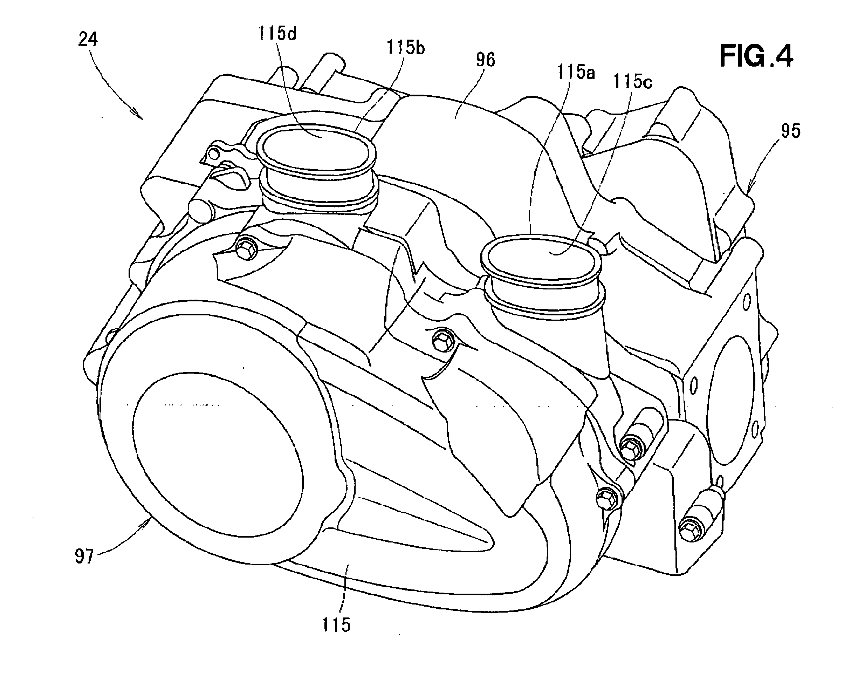

FIG. 4 shows the power unit 24. The power unit 24 shown in FIG. 4 represents part of the engine 95, i.e., a portion excluding the cylinder block 101, the cylinder head 102, and the head cover 103 shown in FIG. 2:

The transmission case 115 of the continuously variable transmission 97 is attached to the right side of the crankcase 96 of the power unit 24. The continuously variable transmission body section 135 of the continuously variable transmission 97 is stored in the transmission chamber 130 of the transmission case 115, as shown in FIG. 5.

A tubular air intake duct connecting part 115a to which the air intake duct 117 (FIG. 2) is connected is integrally formed (see FIG. 3 also) into a forward-inclining protrusion in the front part of the top of the transmission case 115, so as to avoid the engine hanger 86 (FIG. 3) located above in a side view. In the back of the top part of the transmission case 115, a tubular exhaust duct connecting part 115b to which the exhaust duct 118 (FIG. 3) is connected is integrally formed so as to protrude upward at a rearward incline and to be positioned higher than the air intake duct connecting part 115a (see FIG. 3 also).

The reference numeral 115c denotes a connection port of the air intake duct connecting part 115a, and 115d denotes a connection port of the exhaust duct connecting part 115b. These connection ports 115c, 115d are communicated with the interior of the transmission chamber 130.

FIG. 5 shows the power unit, partially in cross section. The power unit 24 comprises the crankcase 96 composed of a left crankcase 131 and a right crankcase 132, a power generator cover 133 attached to the side of the left crankcase 131 in order to cover the power generator, and the transmission case 115 for housing the continuously variable transmission body section 135 of the continuously variable transmission 97 on the side of the right crankcase 132. The continuously variable transmission body section 135 is housed in the transmission chamber 130, which is inside the transmission case 115.

The left crankcase 131 and the right crankcase 132 rotatably support a crankshaft 136 and an output shaft 138 of the power unit 24, and the right crankcase 132 and the transmission case 115 rotatably support a driven shaft 137.

The continuously variable transmission body section 136 comprises a drive pulley 141 attached to the crankshaft 136, a driven pulley 142 attached to the driven shaft 137, and a V belt 143 wound around the drive pulley 141 and the driven pulley 142.

The drive pulley 141 is composed of a fixed half 145 attached to the end of the crankshaft 136, and a movable half 146 swingably spline-fitted to the crankshaft 136 so as to move toward or away from the fixed half 145.

The driven pulley 142 is composed of a fixed half 151 attached to the driven shaft 137, and a movable half 153 swingably spline-fitted to the driven shaft 137 so as to move toward or away from the fixed half 151 and also urged toward the fixed half 151 by a compression coil spring 152.

When the crankshaft 136 rotates, the drive pulley 141 rotates together with the crankshaft 136; the rotation of the drive pulley 141 is transmitted to the driven pulley 142 via the V belt 143; the driven shaft 137 rotates together with the rotation of the driven pulley 142; rotation is induced in the output shaft 138 linked via a plurality of gears to the driven shaft 137, in a drive sprocket 155 attached to the output shaft 138, and in a driven sprocket attached to the drive sprocket 155 via a chain and integrally attached to the rear wheel 41 (FIG. 1); and the rear wheel 41 is driven.

When the rotational speed of the crankshaft 136 increases, a weight 156 disposed adjacent to the movable half 146 is moved radially outward by centrifugal force, causing the movable half 146 to move toward the fixed half 145. The winding diameter of the V belt 143 in the drive pulley 141 thereby increases.

When the winding diameter of the drive pulley 141 increases in this manner, the movable half 153 of the driven pulley 142 moves away from the fixed half 151 against the elastic force of the compression coil spring 152, and the winding diameter of the V belt 143 in the driven pulley 142 decreases.

Since the winding diameter of the V belt 143 increases in the drive pulley 141 and decreases in the driven pulley 142 as described above, the rotation of the driven shaft 137 accelerates relative to the crankshaft 136.

Conversely, when the rotational speed of the crankshaft 136 decreases, the winding diameter of the V belt 143 decreases in the drive pulley 141 and increases in the driven pulley 142, and the rotation of the driven shaft 137 therefore decelerates relative to the crankshaft 136. The rotational speed of the driven shaft 137 is automatically varied in accordance with the rotational speed of the crankshaft 136 as described above.

The transmission case 115 is composed of an inside transmission case 161 attached by a plurality of bolts (not shown) to the right crankcase 132, and a transmission cover 163 attached by a plurality of bolts 162 to the inside transmission case 161, wherein the air intake duct connecting part 115a and the exhaust duct connecting part 115b are formed in the top part of the inside transmission case 161.

The respective connection ports 115c, 115d of the air intake duct connecting part 115a and the exhaust duct connecting part 115b both have longitudinally oblong elliptical shapes, the connection ports 115c, 115d are disposed so as to be aligned longitudinally, and the connection port 115c is positioned above the drive pulley 141, while the connection port 115d is positioned above the driven pulley 142.

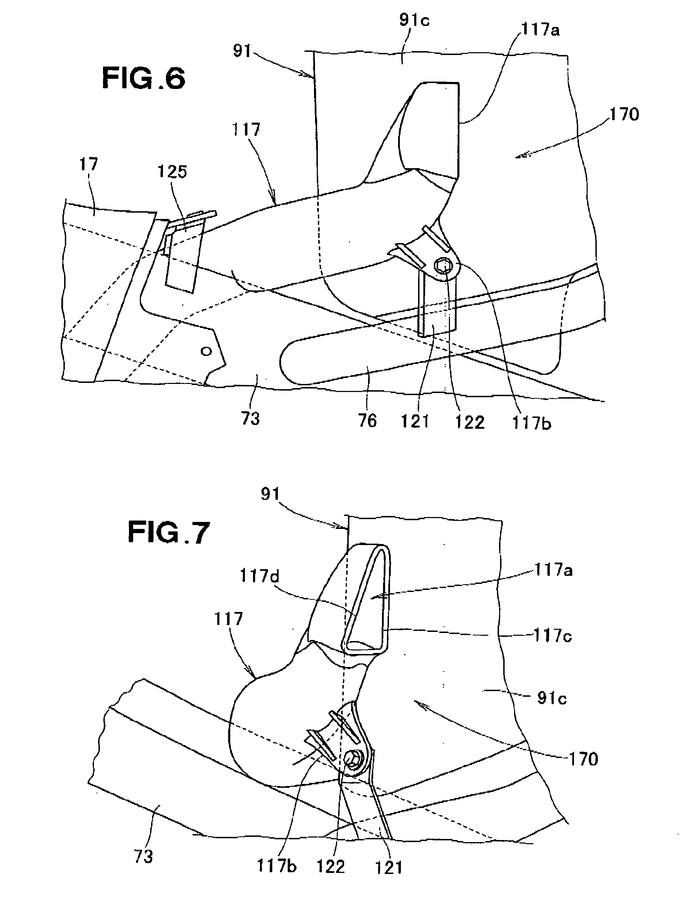

FIG. 6 shows the air intake duct 117 shown in FIG. 2. The air intake duct 117 passes by the side of the main frame 73 from the transmission case 115 (FIG. 3), then passes over the main frame 73 and extends to the front side of the storage box 91. The distal end of the exhaust duct 118 (FIG. 3) is bilaterally symmetrical with the air intake duct 117 and has substantially the same shape, and a description thereof is omitted.

The air intake port 117a which opens toward the rear of the vehicle is provided to the distal end of the air intake duct 117, and the frame attachment piece 117b, which is attached by a bolt 122 to the duct attachment bracket 121 provided to the rear frame 76, is integrally formed below the air intake port 117a.

The air intake port 117a is disposed next to the side surface 91c of the storage box 91 in a space 170 between the storage box 91 and the side cover 34 (FIG. 1). The reference numeral 125 denotes a cover bracket for attaching the bottom of the front part of the center cover 32 (FIG. 1) to the main frame 73.

FIG. 7 shows the peripheral area around the air intake port 117a of the air intake duct 117 shown in FIG. 6. The air intake port 117a of the air intake duct 117 has an elongated triangular shape which opens toward the rear of the vehicle. Forming the air intake port 117a into an elongated triangular shape in this manner makes it possible for one side 117c of the air intake port 117a to be substantially parallel to the side surface 91c of the storage box 91, and thereby be closer to the side surface 91c. Inclining one side 117d of the air intake port 117a so that the top end is closer to the side surface 91c than the distal end makes it possible to bring the port closer to, and in alignment with, the inside surface of the side cover 34 (FIG. 1). It is therefore possible to further reduce the amount by which the side cover 34 protrudes to the side of the vehicle body because of the positioning of the air intake port 117a in the space 170 between the storage box 91 and the side cover 34 (FIG. 1).

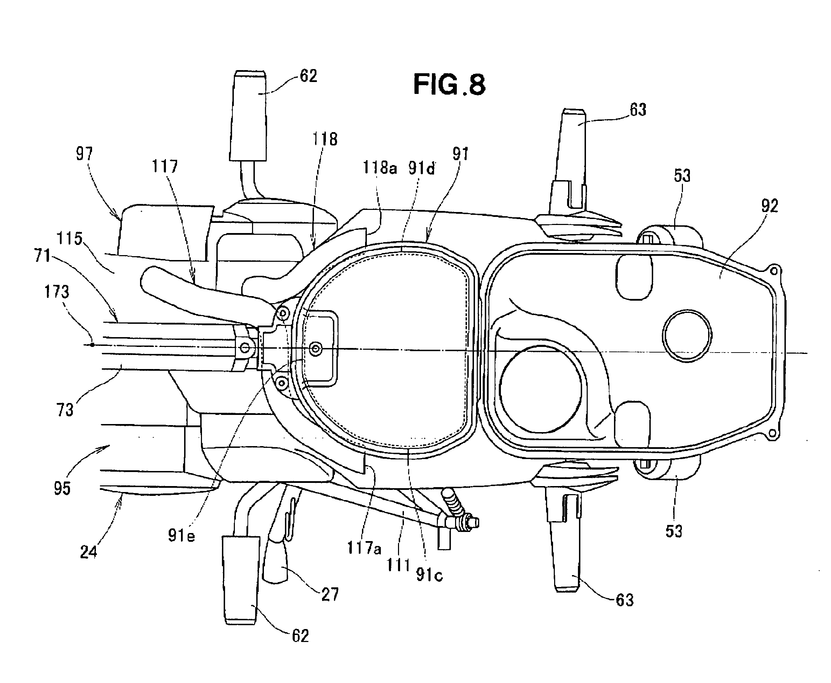

FIG. 8 shows the arrangement relationship between the air intake duct 117 and the exhaust duct 118, wherein the air intake duct 117 and the exhaust duct 118 are disposed to the left and right of the storage box 91.

Specifically, the air intake duct 117 passes by the side of the main frame 73 and extends rearward along the main frame 73, and then passes over the main frame 73 and extends rearward along the external peripheral surface of the storage box 91, i.e., along the front surface 91c and the left side surface 91c. The exhaust duct 118 extends rearward along the external peripheral surface of the storage box 91, i.e., along the front surface 91e and the right side surface 91d.

In other words, the air intake duct 117 and the exhaust duct 118 are disposed to the left and right on either side of a vehicle body center line 173 that extends in the longitudinal direction of the vehicle body. The reference numeral 111 denotes a kickstand.

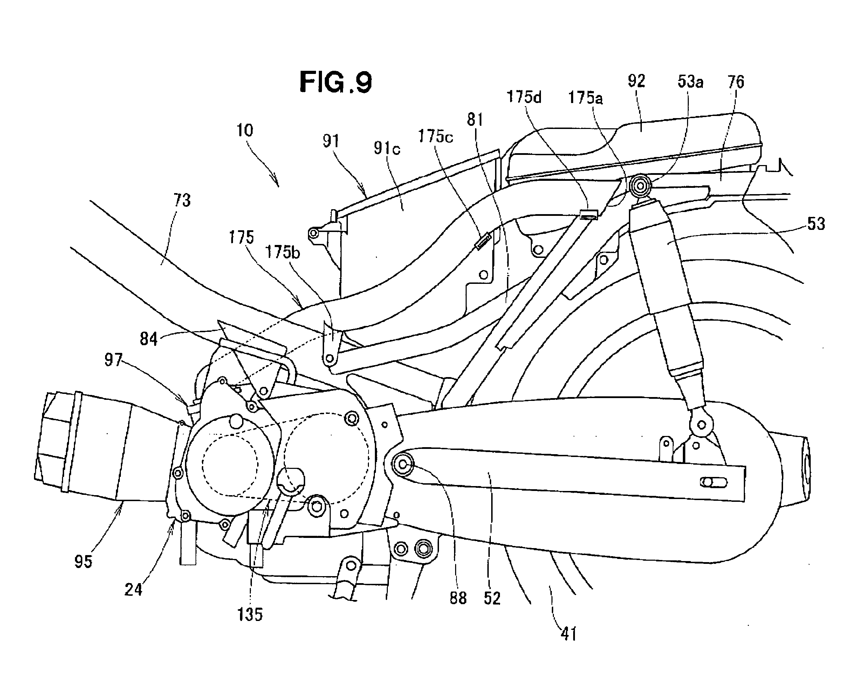

FIG. 9 shows part of a saddled riding vehicle 10 comprising an air intake duct 175 of another embodiment. Connected to the continuously variable transmission 97 is an air intake duct 175 for feeding outside air into the interior and cooling the transmission. The air intake duct 175 extends upward at a rearward incline, passes over the main frame 73 and by the front and left side of the storage box 91, and extends horizontally or substantially horizontally rearward at the left side of the front of the fuel tank 92. An air intake port 175a opens downward at a rearward incline in front of the part where the top end 53a of the rear cushion unit 53 attaches to the rear frame 76.

An attachment piece 175b for attaching the air intake duct 175 to the left sub-frame 81 is integrally formed on the air intake duct 175. Cover attachment pieces 175c, 174d for attaching the air intake duct 175 to the side cover 34 (FIG. 1) are integrally formed on the air intake duct 175.

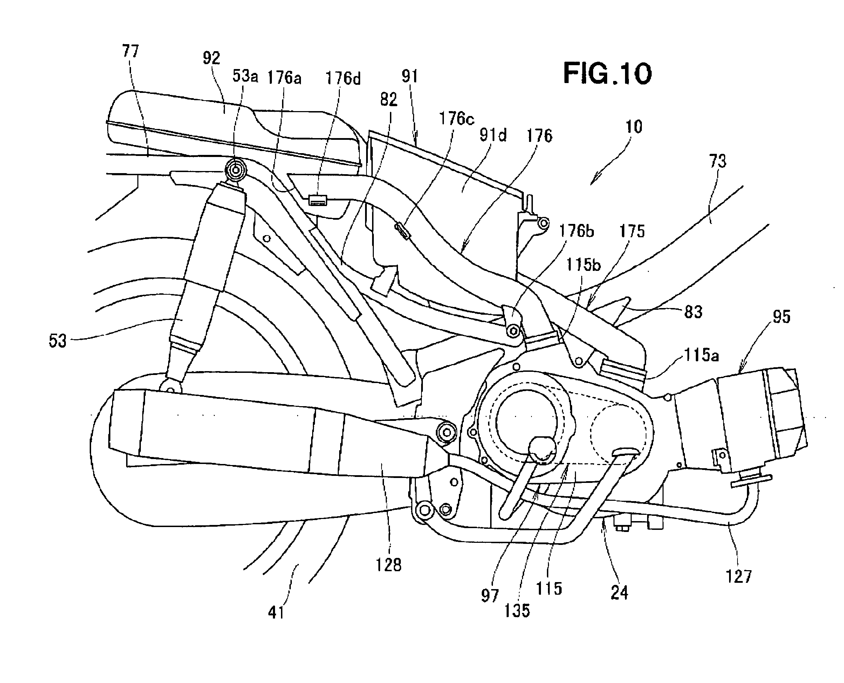

FIG. 10 shows part of a saddled riding vehicle 10 comprising an exhaust duct 176 of another embodiment. An exhaust duct 176 connected to the top of the rear part of the transmission case 115 extends upward at a rearward incline from the area where the case is connected with the transmission case 115, passes by the front and right side of the storage box 91, and extends horizontally or substantially horizontally rearward at the right side of the front of the fuel tank 92. An exhaust port 176a opens downward at a rearward incline in the front of the part where the top end 53a of the rear cushion unit 53 attaches to the rear frame 77.

A muffler 128 is connected to the rear end of the exhaust tube 127. A frame attachment piece 176b for attaching the exhaust duct 176 to the right sub-frame 82 is integrally formed on the exhaust duct 176. Cover attachment pieces 176c , 176d for attaching the exhaust duct 176 to the side cover 36 (FIG. 1) are integrally formed on the exhaust duct 176.

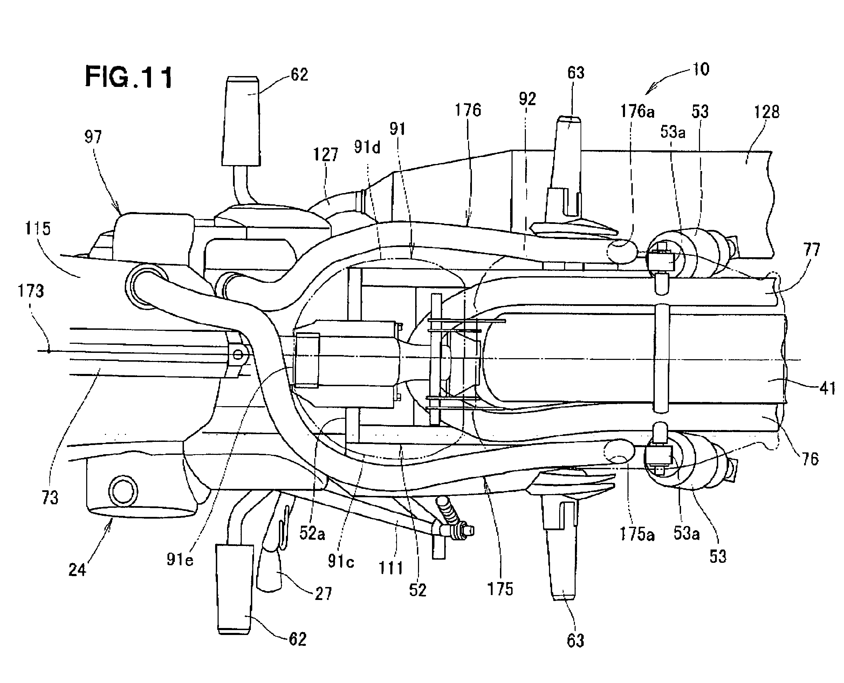

FIG. 11 shows a saddled riding vehicle 10 comprising the air intake duct 175 and the exhaust duct 176 of the other embodiment shown in FIGS. 9 and 10. The air intake duct 175 and the exhaust duct 176 of the other embodiment are disposed so as to be offset to the left and right of the storage box 91 and the fuel tank 92.

Specifically, the air intake duct 175 passes by the side of the main frame 73, extends rearward along the main frame 73, continues to extend rearward along the front surface 91e and side surface 91c of the storage box 91 while passing over the main frame 73, and further continues to extend rearward along the side of the fuel tank 92.

The exhaust duct 176 extends rearward along the front surface 91e and side surface 91d of the storage box 91, and continues to extend rearward along the side of the fuel tank 92. In other words, the air intake duct 175 and the exhaust duct 176 are disposed so as to be offset to the left and right on either side of the vehicle body center line 173 that extends in the longitudinal direction of the vehicle body.

Since, as shown in FIGS. 1 through 11, the air intake ducts 117, 175 and the exhaust ducts 118, 176 extend farther to the rear of the vehicle than the continuously variable transmission 97, a large space for the legs of the driver can be ensured in front of the continuously variable transmission 97.

Since the air intake ports 117a, 175a of the air intake ducts 117, 175 and the exhaust ports 118a, 176a of the exhaust ducts 118, 176 are disposed so as to be offset to the left and right on either side of a vehicle body center line 173 that passes through the vehicle widthwise center and extends in the longitudinal direction, the air intake ports 117a, 175a and the exhaust ports 118a, 176a are separated to the left and right. Therefore, warm air discharged from the exhaust ports 118a, 176a can be inhibited from being drawn in through the air intake ports 117a, 175a, and the continuously variable transmission body section 135 can be effectively cooled by air that has not been warmed.

Furthermore, the seat 31 is disposed above the continuously variable transmission body section 135, the storage box 91 supported on the vehicle body frame 71 is disposed underneath the sent 31, and the air intake ducts 117, 175 and exhaust ducts 118, 176 are disposed so as to be offset to the left and right of the storage box 91 on either side of the storage box 91. Therefore, the storage box 91 between the air intake ducts 117, 175 and the exhaust ducts 118, 176 allows the warm air discharged from the exhaust ports 118a, 176a of the exhaust ducts 118, 176 to be blocked by the storage box 91 and better inhibited from being drawn in through the air intake ports 117a, 175a of the air intake ducts 117, 175. Accordingly, the continuously variable transmission body section 135 can be more effectively cooled by air that has not been warmed.

Furthermore, the air intake ducts 117, 175 and the exhaust ducts 118, 176 are provided so as to extend along the front surface 91e, the side surface 91c, and the side surface 91d as external peripheral surfaces of the storage box 91. Therefore, the amount by which the air intake ducts 117, 175 and exhaust ducts 118, 176 protrude from the front surface 91e, the side surface 91c, and the side surface 91d of the storage box 91 can be reduced, and a size increase in the vehicle body can be prevented.

The swing arm 52, which is swingably attached at the front end to the vehicle body frame 71 and which supports the rear wheel 41 at the rear end, is provided behind the engine 95; and the air intake ducts 117, 175 or the exhaust ducts 118, 176 are disposed farther forward than the swing arm 52, as shown in FIGS. 2, 3, and 8 through 11. Therefore, the air intake ducts 117, 175 and the exhaust ducts 118, 176 can be shortened, and the weight of the air intake ducts 117, 175 and exhaust ducts 118, 176 can be reduced.

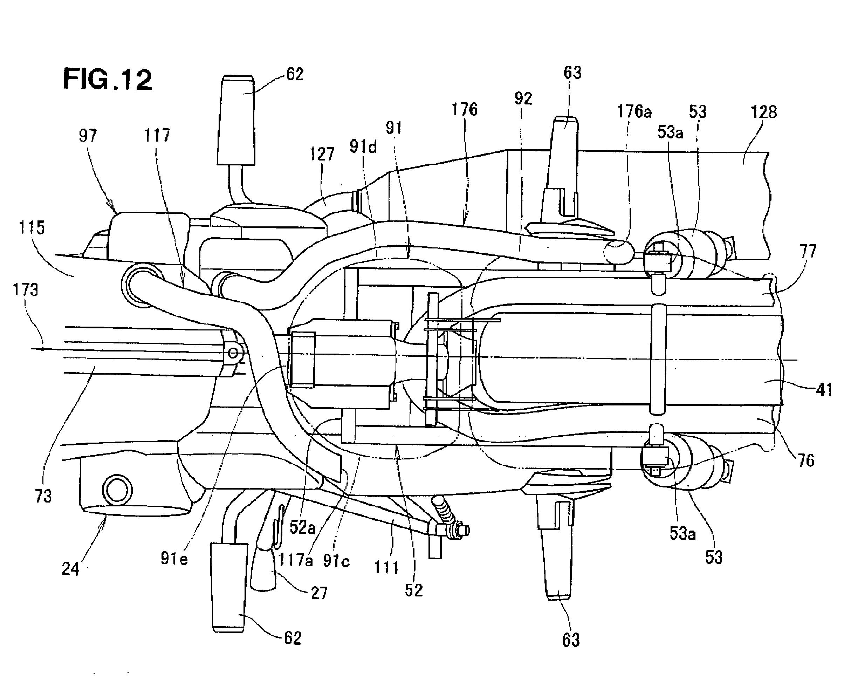

FIG. 12 shows an air intake duct, an exhaust duct, and the peripheral area thereof in yet another embodiment. The air intake duct 117 and the exhaust duct 176 are disposed so as to be offset to the left and right about the storage box 91 and the fuel tank 92. In other words, the air intake duct 117 and the exhaust duct 176 are disposed so as to be separated to the left and right of the vehicle body center line 173.

The air intake duct 117 passes by the side of the main frame 73, extends rearward along the main frame 73, passes over the main frame 73, and extends rearward along the external peripheral surface of the storage box 91, i.e., along the front surface 91e and the left side surface 91c.

The exhaust duct 176 extends rearward along the front surface 91e and the side surface 91d of the storage box 91, and further extends rearward along the side of the fuel tank 92.

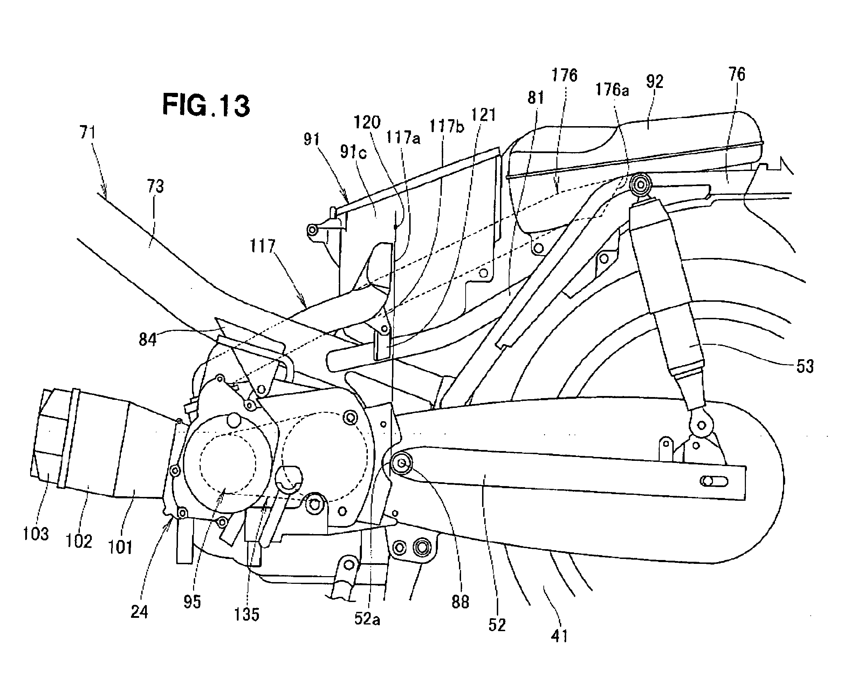

FIG. 13 is a side view of the air intake duct and the exhaust duct of the other embodiment shown in FIG. 12. The air intake duct 117 is disposed in the space formed between the center cover 32 (FIG. 1) and left side cover 34 (FIG. 1) and the storage box 91, and is also disposed farther forward than the front end 52a of the swing arm 52. In other words, the air intake duct 117 is positioned farther forward than a vertical line 120 passing through the front end 52a of the swing arm 52, and the air intake port 117a is positioned to the side of the left side surface 91c of the storage box 91.

The positions of the air intake port 117a and the exhaust port 118a, as well as the positions of the air intake port 175a and the exhaust port 176a, are the same along the longitudinal direction as shown in FIGS. 8 and 11, but the positions are not limited to this option alone, and may differ in the longitudinal direction or be different positions in the vertical direction.

### INDUSTRIAL APPLICABILITY

The present invention is suitable for a saddled riding vehicle comprising a continuously variable transmission.

### REFERENCE SIGNS LIST

10...straddled riding vehicle (motorcycle); 24...power unit; 41...rear wheel; 52...swing arm; 71...vehicle body frame; 91...storage box; 91c, 91d, 91e...outer peripheral surfaces side surface, side surface, front surface); 97...continuously variable transmission; 115... transmission case; 117, 175...air intake duct; 117a, 175a...intake port; 118, 176...exhaust duct; 118a, 176a...exhaust port; 130...transmission chamber; 173... vehicle body center line

## Claims

1. A saddled riding vehicle comprising:
a vehicle body frame (71);
a power unit (24) attached to the vehicle body frame and having a transmission chamber (130) for housing a belt-type continuously variable transmission (97);
an air intake duct (117, 175) for feeding outside air into the transmission chamber, the air intake duct being connected to the power unit; and
an exhaust duct (176) for discharging air in the transmission chamber to the exterior, the exhaust duct being connected to the power unit,
wherein the air intake duct and the exhaust duct both extend farther rearwardly of the vehicle than the continuously variable transmission, and
wherein the air intake duct has an air intake port (117a), the exhaust duct has an exhaust port (118a), and wherein the vehicle has a seat (31) disposed above the continuously variable transmission
**characterized in that** the air intake port and exhaust port are disposed so as to be offset to left and right about a vehicle body center line (173) extending longitudinally through a vehicle widthwise center, a storage box (91) supported on the vehicle body frame is disposed underneath the seat, and the air intake duct and exhaust duct are disposed so as to be offset to left and right of the storage box.

2. The saddled riding vehicle of claim 1, wherein one of the air intake duct and the exhaust duct is provided to extend along an external peripheral surface of the storage box.

3. The saddled riding vehicle of claim 1, wherein the vehicle comprises a swing arm provided behind the power unit so as to be swingably attached at a front end to the vehicle body frame and to support a rear wheel at a rear end, and the air intake duct and the exhaust duct are disposed farther forward than the swing arm.

## Patentansprüche

1. Sattelndes Fahrzeug (1) mit:
einem Fahrzeugskörperrahmen (71);
einem Antrieb (24) verbunden mit dem Fahrzeugskörper-Rahmen und mit einem Getriebegehäuse (130), das ein als Transportband ausgeführtes, kontinuierlich veränderbares Getriebe (97) einschliesst;
einer Lufteinleitung (117, 175), die Aussenluft in das Getriebegehäuse zuführt, wobei die Lufteinleitung mit dem Antrieb verbunden ist; und
einem Abluftkanal (176), der Luft von dem Getriebegehäuse nach aussen abführt, wobei der Abluftkanal mit dem Antrieb verbunden ist,
wobei die Lufteinleitung und der Abluftkanal sich weiter ruckwärts vom Fahrzeug als der kontinuierlich veränderbare Getriebe erstrecken, und
wobei die Lufteinleitung eine Luftansaugöffnung (117a) aufweist, der Abluftkanal eine Luftaustrittsöffnung (118a) aufweist, und wobei das Fahrzeug einen über das kontinuierlich veränderbare Getriebe angeordneten Sitz (31) aufweist,
**dadurch gekennzeichnet, dass** die Lufteinleitung und der Abluftkanal so angeordnet sind, dass sie links und recths über einer Mittelachse (173) des Fahrzeugskörpers abgesetzt sind, die sich längs durch die Fahrzeugs-Breitemitte erstreckt, dass ein unter dem Sitz angeordneter Ablagekasten (91) an dem Fahrzeugskörperrahmen gestüzt ist, und die Lufteinleitung und der Abluftkanal so angeordnet sind, dass sie links und recths von dem Ablagekasten abgesetzt sind.

2. Sattelndes Fahrzeug nach Anspruch 1, wobei entweder die Lufteinleitung oder der Abluftkanal vorgesehen ist, sich entlang einer äusseren Umfangsfläche des Ablagekastens zu erstrecken.

3. Sattelndes Fahrzeug nach Anspruch 1, wobei das Fahrzeug einen Schwenkhebel aufweist, der hinten dem Antrieb vorgesehen ist, so dass er stirnseitig schwenkbar am Fahrzeugskörperrahmen verbunden ist und so dass er ein Hinterrad am Hinterbau unterstüzt, und die Lufteinleitung und der Abluftkanal weiter vorne als der Schwenkhebel angeordnet sind.

## Revendications

1. Véhicule en selle qui présente:
une carrosserie du véhicule (71);un moteur (24) relié à la carrosserie avec un boîtier de transmission (130) qui abrite une courroie à variation continue (97); un conduit d'air d'admission (117, 175) pour amener l'air extérieur dans la chambre de transmission, le conduit d'admission d'air étant relié à l'unité de puissance (le moteur); et un conduit d'aspiration (176) pour évacuer l'air du boîtier de transmission vers l'extérieur, celui-ci étant reliée au moteur; les conduits d'entrée et d'échappement s'étendent tous deux de la transmission variable en continu à l'arrière du véhicule, le conduit d'entrée a un port d'inspiration (117a), le conduit d'échappement a un port d'aspiration (118a); le véhicule a un siège (31) disposé au-dessus de la transmission à variation continue afin que les conduits d'entrée et d'échappement soient disposés à gauche et à droite de l'axe médiant (173); une boîte de dépot (91) soutenue à la carrosserie du véhicule est disposée sous le siège entre les deux conduits d'air (entrée et échappement).

2. Véhicule en selle selon la revendication 1, auquel l'un des conduits est prévu pour s'étendre le long d'une surface périphérique extérieure de la boîte de rangement.

3. Véhicule en selle selon la revendication 1, auquel le véhicule comprend un bras oscillant prévu derrière l'unité d'alimentation de façon à être attaché de manière pivotante à une extrémité avant sur le cadre de carrosserie du véhicule et à supporter une roue arrière à une extrémité arrière et auquel les conduits sont dipsosés devant le bras oscillant.
